# EUROPÄISCHE PATENTSCHRIFT

(11) **EP 2 162 330 B1**
(45) Veröffentlichungstag und Bekanntmachung des Hinweises auf die Patenterteilung: **23.11.2011**
(21) Anmeldenummer: 08759761.3
(22) Anmeldetag: 20.05.2008
(51) Int. Cl.: B60T 13/52, B60T 13/57, B60T 11/18, B60T 7/04, B60T 7/06

(54) **BREMSKRAFTVERSTÄRKER**
SERVO BRAKE
AMPLIFICATEUR DE FORCE DE FREINAGE

(30) Priorität: 04.07.2007 DE 102007031255; 18.09.2007 DE 102007044423
(43) Veröffentlichungstag der Anmeldung: 17.03.2010
(73) Patentinhaber: Continental Teves AG & Co. OHG, 60488 Frankfurt (DE)
(72) Erfinder: DROTT, Peter, 65936 Frankfurt (DE); VON HAYN, Holger, 61118 Bad Vilbel (DE); KROLL, Wolfgang, 65719 Hofheim (DE); ICKLER, Volker, 36275 Kirchheim (DE); SELLINGER, Thomas, 63073 Offenbach (DE)
(86) Internationale Anmeldenummer: PCT/EP2008/056145
(87) Internationale Veröffentlichungsnummer: WO 2009/003759

(56) Entgegenhaltungen:
- EP-A- 0 417 945
- DE-C1- 4 208 496
- GB-A- 2 305 478
- US-A- 3 988 945

## Beschreibung

Die Erfindung betrifft einen Bremskraftverstärker für eine Kraftfahrzeugbremsanlage vom Typ "Brake-by-wire", der einerseits mittels eines Bremspedals und andererseits fahrerwunschabhängig sowie unabhängig vom Fahrerwillen mittels einer elektronischen Steuereinheit betätigbar ist, wobei die Ankopplung des Bremspedals mittels eines mit Längsführungsöffnungen versehenen Kolbenstangenkopfes an einem Eingangsglied des Bremskraftverstärkers derart ausgeführt ist, dass eine begrenzte Relativbewegung des Bremspedals gegenüber dem Eingangsglied möglich ist, wodurch insbesondere in der Betriebsart "Brake-by-wire" eine Entkopplung der kraftübertragenden Verbindung zwischen dem Bremspedal und dem Eingangsglied gewährleistet ist wobei der Kolbenstangenkopf als ein das Bremspedal umgreifendes, U-förmiges Teil ausgeführt ist und zwei parallel zueinander verlaufende Schenkel aufweist, in denen die Längsführungsöffnungen ausgebildet sind.

Ein Bremskraftverstärker für eine Kraftfahrzeugbremsanlage vom Typ "Brake-by-wire" ist aus der europäischen Patentschrift EP 0 417 945 B1 bekannt. Eine das Eingangsglied des vorbekannten Bremskraftverstärkers bildende Kolbenstange weist eine Längsführungsöffnung auf, die einen mit einem Bremspedal fest verbundenen Bolzen aufnimmt. Die Längsführungsöffnung ermöglicht eine begrenzte Relativbewegung des Eingangsgliedes gegenüber dem Bolzen bzw. dem Bremspedal, so dass bei der Verwendung des Bremskraftverstärkers in einem Antriebsschlupfregelfall bzw. bei einer vom Fahrerwillen unabhängigen Ansteuerung des Bremskraftverstärkers sich das Eingangsglied in der Betätigungsrichtung bewegt, während das Bremspedal stehen bleibt. Als nachteilig werden jedoch die kritische Zugänglichkeit des Kolbenstangenkopfes im Fahrgastraum des Kraftfahrzeuges, bzw. die Probleme empfunden, die bei dem Einbau des Bremspedals im Fahrgastraum insbesondere bei dessen Ankopplung an das Eingangsglied des Bremskraftverstärkers auftreten.

Aus der gattungsbildenden DE 42 08 496 C1 ist es bekannt, den Kolbenstangenkopf als ein das Bremspedal umgreifendes, U-förmiges Teil mit zwei parallel zueinander verlaufenden Schenkeln auszuführen, in denen die Längsführungsöffnungen ausgebildet sind.

Ferner ist aus der US 3,988,945 A ein Eingangsglied mit einem das Bremspedal umgreifenden, U-förmigen Kolbenkopf zu entnehmen, welcher mit einem Stift in einer Ausnehmung des Bremspedals bewegt werden kann.

Es ist daher Aufgabe der vorliegenden Erfindung, einen Bremskraftverstärker der eingangs genannten Gattung dahingehend zu verbessern, dass die oben aufgeführten Nachteile weitest gehend vermieden werden. Außerdem soll der Fertigungsprozess des Bremskraftverstärkers vereinfacht werden.

Diese Aufgabe wird erfindungsgemäß dadurch gelöst, dass der Kolbenstangenkopf als Biegeteil ausgeführt ist und dem Eingangsglied abgewandte Endbereiche der Schenkel mit angeprägten Einführschrägen zum Zentrieren und Positionieren des Bolzens bei der Montage des Bremspedals versehen sind.

Vorteilhafte Weiterbildungen des Erfindungsgegenstandes sind in den Unteransprüchen 2 bis 13 aufgeführt.

Weitere Merkmale und Vorteile der Erfindung gehen aus der nachfolgenden Beschreibung von zwei Ausführungsbeispielen unter Bezugnahme auf die beiliegende Zeichnung hervor. In der Zeichnung zeigen:
Fig. 1 eine Betätigungseinheit einer Kraftfahrzeugbremsanlage vom Typ "Brake-by-wire" mit einem erfindungsgemäßen Bremskraftverstärker in einer Seitenansicht;
Fig. 2 eine dreidimensionale Darstellung einer ersten Ausführung des erfindungsgemäßen Kolbenstangenkopfes;
Fig. 3a und b eine vereinfachte Darstellung der Fertigung des in Fig. 2 gezeigten Kolbenstangenkopfes;
Fig. 4 eine dreidimensionale Darstellung einer zweiten Ausführung des erfindungsgemäßen Kolbenstangenkopfes;
Fig. 5 einen Montageschritt bei dem Einbau des Bremspedals bzw. seiner Verbindung mit dem erfindungsgemäßen Kolbenstangenkopf gemäß Fig. 4; und
Fig. 6 eine dreidimensionale Darstellung des erfindungsgemäßen Kolbenstangenkopfes gemäß Fig. 4 mit eingebautem Bremspedal.

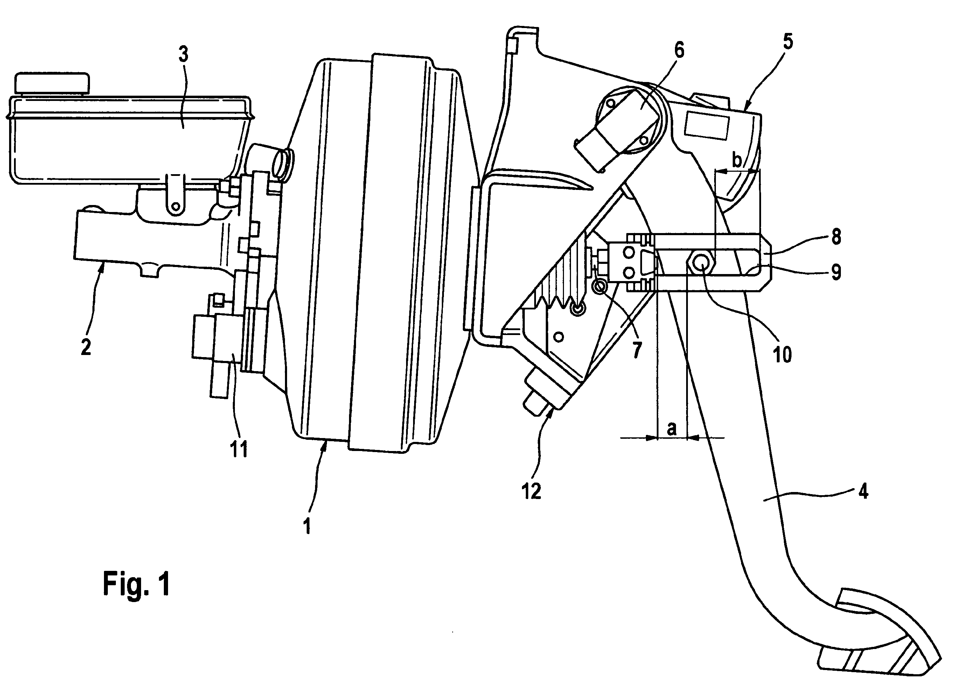

Die in Fig. 1 dargestellte Betätigungseinheit besteht aus einem Bremskraftverstärker, vorzugsweise einem Unterdruckbremskraftverstärker 1, einem dem Bremskraftverstärker 1 nachgeschalteten Hauptbremszylinder, vorzugsweise einem Tandemhauptzylinder 2, an dessen nicht dargestellte Druckräume unter Zwischenschaltung einer ebenfalls nicht dargestellten hydraulischen Steuer- und Regeleinheit Radbremsen des Kraftfahrzeuges angeschlossen sind, sowie einem dem Hauptbremszylinder 2 zugeordneten Druckmittelvorratsbehälter 3. Der Betätigung des Bremskraftverstärkers 1 durch den Fahrer dient ein Bremspedal 4, wobei ein mit dem Bremspedal 4 insbesondere in der Betriebsart "Brake-by-wire" zusammenwirkender, lediglich angedeuteter Pedalwegsimulator 5 vorgesehen ist, der dem Fahrer das gewöhnliche Bremspedalgefühl vermittelt. Ein Fahrerverzögerungswunsch bzw. der Betätigungsweg des Bremspedals 4 wird mittels mindestens einer Sensoreinrichtung 6 erfasst, deren Signale einer nicht gezeigten elektronischen Steuereinheit zugeführt werden. Durch die Ausgangssignale der elektronischen Steuer-einheit ist u. a. ein dem Bremskraftverstärker 1 zugeordneter Elektromagnet ansteuerbar, der eine vom Fahrerwillen unabhängige Betätigung eines pneumatischen Steuerventils ermöglicht, das eine Luftzufuhr zum Bremskraftverstärker 1 steuert.

Ein mit dem Bremspedal 4 gekoppeltes Eingangsglied bzw. eine Kolbenstange 7, die der Betätigung des vorhin genannten Steuerventils durch den Fahrer dient, weist einen Kolbenstangenkopf 8 auf, in dem Längsführungsöffnungen 9 ausgebildet sind. Die Längsführungsöffnungen 9 nehmen ein mit dem Bremspedal 4 verbundenes Kraftübertragungsteil 10 auf, das als ein Bolzen ausgeführt ist. Dabei ist die Anordnung der genannten Teile 8, 10 derart getroffen, dass zwischen der in der Zeichnung linksseitigen Begrenzung der Längsführungsöffnungen 9 und dem Bolzen 10 ein axialer Spalt bzw. Abstand "a" vorgesehen ist, der in der Betriebsart "Brake-by-wire" eine Entkopplung der kraftübertragenden Verbindung zwischen dem Bremspedal 4 und dem Bremskraftverstärker 1 gewährleistet. Durch einen zwischen dem Bolzen 10 und der in der Zeichnung linksseitigen Begrenzung der Längsführungsöffnungen 9 vorgesehenen axialen Spalt bzw. Abstand "b" wird erreicht, dass bei einer vom Fahrerwillen unabhängigen Ansteuerung des Bremskraftverstärkers 1 das Bremspedal 4 nicht mit bewegt wird. Ein Wegsensor 11 dient der Erfassung des Weges einer die Verstärkungskraft des Bremskraftverstärkers 1 aufbringenden beweglichen Wand bzw. des Weges eines Ausgangsglieds des Bremskraftverstärkers 1, das seine Ausgangskraft auf einen nicht dargestellten ersten Kolben des Hauptbremszylinders 2 überträgt.

Der Pedalwegsimulator 5, durch den, wie bereits erwähnt, in der Betriebsart "Brake-by-wire" eine auf das Bremspedal 4 wirkende Rückstellkraft unabhängig von einer Betätigung des Bremskraftverstärkers 1 simulierbar ist, ist derart ausgeführt, dass er mittels einer lediglich schematisch angedeuteten Zu- und Abschalteinrichtung 12 in der Betriebsart "Brake-by-wire" bei der Entkopplung der kraftübertragenden Verbindung zwischen dem Bremspedal 4 und dem Bremskraftverstärker 1 zuschaltbar und außerhalb der Betriebsart "Brake-by-wire" abschaltbar ist.

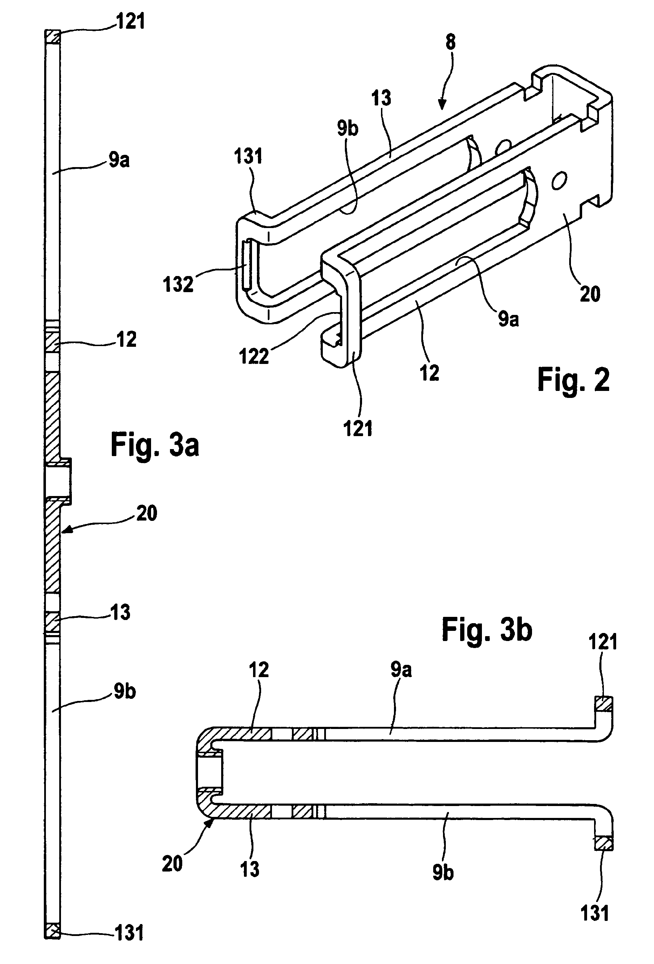

Wie insbesondere Fig. 2 bzw. 3a und b zu entnehmen ist, ist der vorhin erwähnte Kolbenstangenkopf 8 als ein U-förmiges Blechbiegeteil 20 ausgebildet, dessen Schenkel 12, 13 das Bremspedal umgreifen und Längsführungsöffnungen 9a, 9b aufweisen, die vor dem Biegevorgang durch Stanzen hergestellt werden. Die Endbereiche 121, 131 der Schenkel 12, 13 erstrecken sich unter einem Winkel von ca. 90° nach außen und weisen jeweils eine Einführschrägen 122, 132 auf, die dem Zentrieren und Positionieren des Bolzens 10 bei der Montage des Bremspedals 4 dienen. Die erwähnten Endbereiche 121, 131 können, wie in der Zeichnung dargestellt, durch Biegen, oder durch Tiefziehen hergestellt werden.

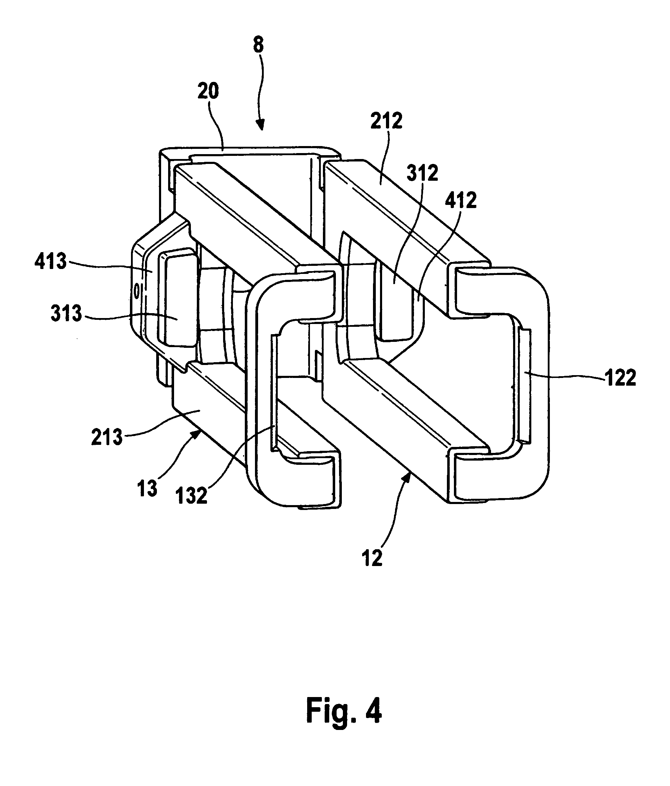

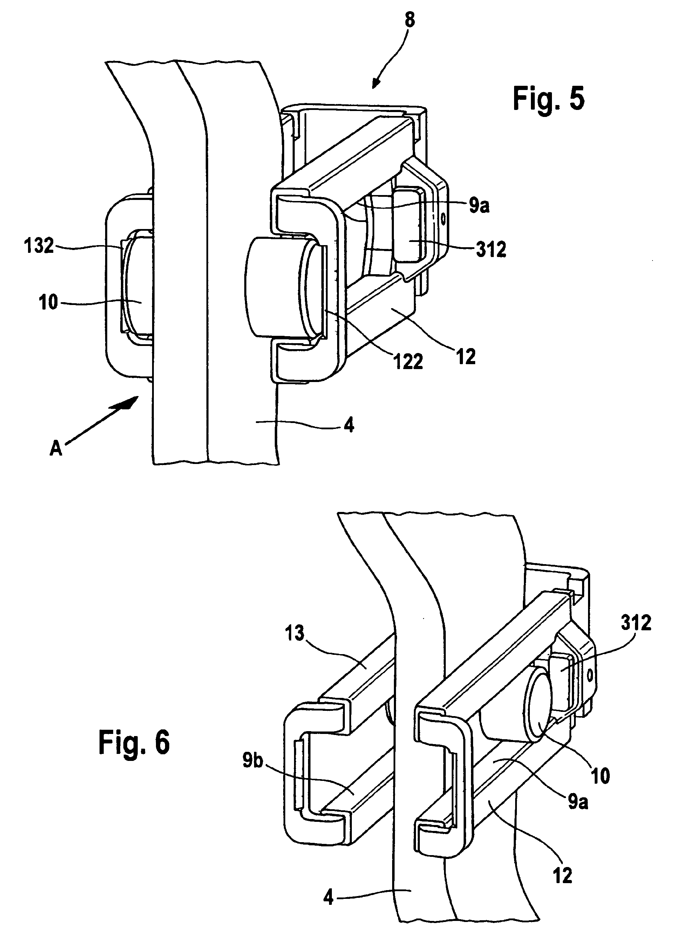

Die in Fig. 4 gezeigte Ausführung des erfindungsgemäßen Kolbenstangenkopfes 8 weist im Bereich der Schenkel 12, 13 Mittel auf, die die zwischen dem Kolbenstangenkopf 8 und dem Bolzen 10 bei deren Relativbewegung zueinander auftretende Reibung minimieren. Die Mittel sind im gezeigten Beispiel als eine Ummantelung 212, 213 aus gleitfähigem Kunststoff ausgebildet, mit dem die Schenkel 12, 13 in ihren den Bolzen 10 führenden Abschnitten umspritzt sind und die innerhalb der Längsführungsöffnungen 9a, b Gleitflächen für den Bolzen 10 bereitstellen. Der erwähnte Kunststoff bildet gleichzeitig Halteelemente 412, 413 für Dämpfungselemente 312, 313, die der Dämpfung des Anschlags des Bolzens 10 am Ende seines Betätigungshubes dienen. Alternativ kann ein einziges, nicht dargestelltes Dämpfungselement im vorderen Bereich des Kolbenstangenkopfes 8 zwischen dessen Schenkeln angeordnet werden. Der Bolzen 10 (s. insbesondere Fig. 5 u. 6) ist mit dem Bremspedal 4 durch eine Schweiß- oder eine Nietverbindung fest verbunden, oder mit dem Bremspedal 4 verschraubt.

Zu Beginn des in Fig. 5 vereinfacht dargestellten Montagevorgangs zum Verbinden des Bremspedals 4 mit dem Kolbenstangenkopf 8 nach der Erfindung wird der Kolbenstangenkopf 8 gegenüber dem Bremspedal 4 derart positioniert, dass der Bolzen 10 zwischen den Schenkeln 12, 13 im Bereich der Einführschrägen 122, 132 liegt. Anschließend wird das Bremspedal 4 in Richtung des Pfeiles "A" eingefädelt, wobei der Bolzen 10 innerhalb der Längsführungsöffnungen 9a, b geführt wird. Die Bewegung des Bolzens 10 innerhalb der Längsführungsöffnungen 9a, b ist durch die im Zusammenhang mit Fig. 4 erwähnten Dämpfungselemente 312, begrenzt. Die zusammengebaute Baugruppe "Bremspedal - Kolbenstangenkopf" ist in Fig. 6 dargestellt. Nach der kompletten Montage des Bremsgerätes kommt der Pedalbolzen niemals mehr in den Bereich der Einfädelöffnung.

## Patentansprüche

1. Bremskraftverstärker (1) für eine Kraftfahrzeugbremsanlage vom Typ "Brake-by-wire", der einerseits mittels eines Bremspedals (4) und andererseits fahrerwunschabhängig sowie unabhängig vom Fahrerwillen mittels einer elektronischen Steuereinheit betätigbar ist, wobei die Ankopplung des Bremspedals (4) mittels eines mit Längsführungsöffnungen (9a, b) versehenen Kolbenstangenkopfes (8) an einem Eingangsglied (7) des Bremskraftverstärkers (1) derart ausgeführt ist, dass eine begrenzte Relativbewegung des Bremspedals (4) gegenüber dem Eingangsglied (7) möglich ist, wodurch insbesondere in der Betriebsart "Brake-by-wire" eine Entkopplung der kraftübertragenden Verbindung zwischen dem Bremspedal (4) und dem Eingangsglied (7) gewährleistet ist, wobei der Kolbenstangenkopf (8) als ein das Bremspedal (4) umgreifendes, U-förmiges Teil (20) ausgeführt ist und zwei parallel zueinander verlaufende Schenkel (12, 13) aufweist, in denen die Längsführungsöffnungen (9a, b) ausgebildet sind,
**dadurch gekennzeichnet, dass** der Kolbenstangenkopf (8) als Biegeteil (20) ausgeführt ist und dem Eingangsglied (7) abgewandte Endbereiche (121, 131) der Schenkel (12, 13) mit angeprägten Einführschrägen (122, 132) zum Zentrieren und Positionieren des Bolzens (10) bei der Montage des Bremspedals (4) versehen sind.

2. Bremskraftverstärker nach Anspruch 1 **dadurch gekennzeichnet, dass** der Kolbenstangenkopf (8) an seinem dem Eingangsglied (7) abgewandten Ende offen ausgebildet ist.

3. Bremskraftverstärker nach Anspruch 1 oder 2 **dadurch gekennzeichnet, dass** die Längsführungsöffnungen (9a, b) als durch Stanzen hergestellte Öffnungen ausgebildet sind.

4. Bremskraftverstärker nach Anspruch 3 **dadurch gekennzeichnet, dass** die Schenkel (12, 13) am Ende der Längsführungsöffnungen (9a, b) Verbindungsabschnitte (121, 131) aufweisen, die eine ausreichende Stabilität des Kolbenstangenkopfes (8) gewährleisten.

5. Bremskraftverstärker nach einem der Ansprüche 1 bis 4 **dadurch gekennzeichnet, dass** die Längsführungsöffnungen (9a, b) einen mit dem Bremspedal (4) fest verbundenen Bolzen (10) aufnehmen, der der Kraftübertragung zwischen dem Bremspedal (4) und dem Eingangsglied (7) des Bremskraftverstärkers (1) dient.

6. Bremskraftverstärker nach einem der Ansprüche 3 bis 5 **dadurch gekennzeichnet, dass** die dem Eingangsglied (7) abgewandten Endbereiche (121, 131) der Schenkel (12, 13) sich aus Stabilitätsgründen nach außen senkrecht zur Längsachse der Längsführungsöffnungen (9a, b) erstrecken.

7. Bremskraftverstärker nach Anspruch 6 **dadurch gekennzeichnet, dass** die sich nach außen erstreckenden Endbereiche (121, 131) der Schenkel (12, 13) durch Biegen hergestellt sind.

8. Bremskraftverstärker nach Anspruch 6 **dadurch gekennzeichnet, dass** die sich nach außen erstreckenden Endbereiche der Schenkel durch Tiefziehen hergestellt sind.

9. Bremskraftverstärker nach Anspruch 1 **dadurch gekennzeichnet, dass** der Kolbenstangenkopf (8) am Ende des Bewegungsbereichs des Bolzens (10) mindestens ein elastisches Dämpfungselement (312, 313) zum Dämpfen des Anschlags des Bolzens (10) aufweist.

10. Bremskraftverstärker nach einem der Ansprüche 1 bis 9 **dadurch gekennzeichnet, dass** die Längsführungsöffnungen (9a, b) oder der Bolzen (10) mit Mitteln versehen sind, die eine bei der Relativbewegung des Bolzens (10) gegenüber dem Kolbenstangenkopf (8) entstehende Reibung verringern.

11. Bremskraftverstärker nach Anspruch 10 **dadurch gekennzeichnet, dass** die Längsführungsöffnungen (9) mit einer Kunststoffauskleidung bzw. die Schenkel (12, 13) des Kolbenstangenkopfes (8) mit einer Kunststoffummantelung (212, 213) und/oder der Bolzen mit einer Kunststoffummantelung versehen sind/ist.

12. Bremskraftverstärker nach Anspruch 10 **dadurch gekennzeichnet, dass** die Schenkel (12, 13) des Kolbenstangenkopfes (6) mit Kunststoff umspritzt sind.

13. Bremskraftverstärker nach einem der Ansprüche 10 bis 12 **dadurch gekennzeichnet, dass** die Kunststoffummantelung (212, 213) der Schenkel (12, 13) Halteelemente (412, 413) bildet, die die elastischen Dämpfungselemente (312, 313) aufnehmen.

## Claims

1. Brake booster (1) for a motor vehicle brake system of the "brake-by-wire" type, which can be activated, on the one hand, by means of a brake pedal (4) and, on the other hand, as a function of a driver's request, as well as independently of the driver's will by means of an electronic control unit, wherein the coupling of the brake pedal (4) to an input element (7) of the brake booster (1) is embodied by means of a piston rod head (8) provided with longitudinal guide openings (9a, b), in such a way that a limited relative movement of the brake pedal (4) is possible with respect to the input element (7), as a result of which, in particular in the "brake-by-wire" operating mode, decoupling of the force-transmitting connection between the brake pedal (4) and the input element (7) is ensured, wherein the piston rod head (8) is embodied as a U-shaped part (20) which engages around the brake pedal (4) and has two limbs (12, 13) which run parallel to one another and in which the longitudinal guide openings (9a, b) are formed, **characterized in that** the piston rod head (8) is embodied as a bent part (20), and end regions (121, 131), facing away from the input element (7), of the limbs (12, 13) are provided with stamped-on insertion slopes (122, 132) for centring and positioning the bolt (10) during the assembly of the brake pedal (4).

2. Brake booster according to Claim 1, **characterized in that** the piston rod head (8) is of open design at its end facing away from the input element (7).

3. Brake booster according to Claim 1 or 2, **characterized in that** the longitudinal guide openings (9a, b) are formed as openings produced by punching.

4. Brake booster according to Claim 3, **characterized in that** the limbs (12, 13) have, at the end of the longitudinal guide openings (9a, b), connecting sections (121, 131) which ensure sufficient stability of the piston rod head (8).

5. Brake booster according to one of Claims 1 to 4, **characterized in that** the longitudinal guide openings (9a, b) receive a bolt (10) which is permanently connected to the brake pedal (4) and which serves to transmit force between the brake pedal (4) and the input element (7) of the brake booster (1).

6. Brake booster according to one of Claims 3 to 5, **characterized in that** the end regions (121, 131), facing away from the input element (7), of the limbs (12, 13) extend outward perpendicularly with respect to the longitudinal axis of the longitudinal guide openings (9a, b) for reasons of stability.

7. Brake booster according to Claim 6, **characterized in that** the outward extending end regions (121, 131) of the limbs (12, 13) are produced by bending.

8. Brake booster according to Claim 6, **characterized in that** the outward extending end regions of the limbs are produced by deep drawing.

9. Brake booster according to Claim 1, **characterized in that** the piston rod head (8) has, at the end of the movement range of the bolt (10), at least one elastic damping element (312, 313) for damping the impact of the bolt (10).

10. Brake booster according to one of Claims 1 to 9, **characterized in that** the longitudinal guide openings (9a, b) or the bolt (10) are provided with means which reduce friction occurring during the relative movement of the bolt (10) with respect to the piston rod head (8).

11. Brake booster according to Claim 10, **characterized in that** the longitudinal guide openings (9) are provided with a plastic lining, and/or the limbs (12, 13) of the piston rod head (8) are provided with a plastic sheath (212, 213) and/or the bolt is provided with a plastic sheath.

12. Brake booster according to Claim 10, **characterized in that** the limbs (12, 13) of the piston rod head (8) are encapsulated with plastic by injection moulding.

13. Brake booster according to one of Claims 10 to 12, **characterized in that** the plastic sheath (212, 213) of the limbs (12, 13) forms securing elements (412, 413) which hold the elastic damping elements (312, 313).

## Revendications

1. Amplificateur de force de freinage (1) pour une installation de frein de véhicule automobile du type "Brake-by-wire", ou système de freinage électronique, qui peut être actionné d'une part au moyen d'une pédale de frein (4) et d'autre part en fonction du souhait du conducteur ainsi qu'indépendamment de la volonté du conducteur au moyen d'une unité de commande électronique, l'accouplement de la pédale de frein (4) étant réalisé au moyen d'une tête de tige de piston (8) pourvue d'ouvertures de guidage longitudinales (9a, b) au niveau d'un organe d'entrée (7) de l'amplificateur de force de freinage (1), de telle sorte qu'un mouvement relatif limité de la pédale de frein (4) par rapport à l'organe d'entrée (7) soit possible, de sorte que notamment dans le mode de fonctionnement par freinage électronique, un désaccouplement de la connexion de transfert de force entre la pédale de frein (4) et l'organe d'entrée (7) soit assuré, la tête de tige de piston (8) étant réalisée sous forme de pièce (20) en forme de U venant en prise autour de la pédale de frein (4), et présentant deux branches (12, 13) s'étendant parallèlement l'une à l'autre, dans lesquelles sont réalisées les ouvertures de guidage longitudinales (9a, b), **caractérisé en ce que** la tête de tige de piston (8) est réalisée sous forme de pièce cintrée (20) et des régions d'extrémité (121, 131) des branches (12, 13) opposées à l'organe d'entrée (7) sont pourvues de biseaux d'insertion renfoncés (122, 132) pour le centrage et le positionnement du boulon (10) lors du montage de la pédale de frein (4).

2. Amplificateur de force de freinage selon la revendication 1, **caractérisé en ce que** la tête de tige de piston (8) est réalisée sous forme ouverte à son extrémité opposée à l'organe d'entrée (7).

3. Amplificateur de force de freinage selon la revendication 1 ou 2, **caractérisé en ce que** les ouvertures de guidage longitudinales (9a, b) sont réalisées sous forme d'ouvertures fabriquées par estampage.

4. Amplificateur de force de freinage selon la revendication 3, **caractérisé en ce que** les branches (12, 13) présentent à l'extrémité des ouvertures de guidage longitudinales (9a, b) des portions de connexion (121, 131) qui garantissent une stabilité suffisante de la tête de tige de piston (8).

5. Amplificateur de force de freinage selon l'une quelconque des revendications 1 à 4, **caractérisé en ce que** les ouvertures de guidage longitudinales (9a, b) reçoivent un boulon (10) connecté fixement à la pédale de frein (4), qui sert au transfert de force entre la pédale de frein (4) et l'organe d'entrée (7) de l'amplificateur de force de freinage (1).

6. Amplificateur de force de freinage selon l'une quelconque des revendications 3 à 5, **caractérisé en ce que** les régions d'extrémité (121, 131) des branches (12, 13) opposées à l'organe d'entrée (7) s'étendent pour des raisons de stabilité vers l'extérieur perpendiculairement à l'axe longitudinal des ouvertures de guidage longitudinales (9a, b).

7. Amplificateur de force de freinage selon la revendication 6, **caractérisé en ce que** les régions d'extrémité (121, 131) des branches (12, 13) s'étendant vers l'extérieur sont fabriquées par cintrage.

8. Amplificateur de force de freinage selon la revendication 6, **caractérisé en ce que** les régions d'extrémité des branches s'étendant vers l'extérieur sont fabriquées par emboutissage profond.

9. Amplificateur de force de freinage selon la revendication 1, **caractérisé en ce que** la tête de tige de piston (8) présente à l'extrémité de la plage de déplacement du boulon (10) au moins un élément d'amortissement élastique (312, 313) pour l'amortissement de la butée du boulon (10).

10. Amplificateur de force de freinage selon l'une quelconque des revendications 1 à 9, **caractérisé en ce que** les ouvertures de guidage longitudinales (9a, b) ou le boulon (10) sont pourvus de moyens qui réduisent un frottement se produisant lors du mouvement relatif du boulon (10) par rapport à la tête de tige de piston (8).

11. Amplificateur de force de freinage selon la revendication 10, **caractérisé en ce que** les ouvertures de guidage longitudinales (9) sont pourvues d'un habillage en plastique, ou les branches (12, 13) de la tête de tige de piston (8) sont pourvues d'une gaine en plastique (212, 213) et/ou le boulon est pourvu d'une gaine en plastique.

12. Amplificateur de force de freinage selon la revendication 10, **caractérisé en ce que** les branches (12, 13) de la tête de tige de piston (8) sont surmoulées avec du plastique.

13. Amplificateur de force de freinage selon l'une quelconque des revendications 10 à 12, **caractérisé en ce que** la gaine en plastique (212, 213) des branches (12, 13) forme des éléments de retenue (412, 413) qui reçoivent des éléments d'amortissement élastiques (312, 313).
